# EUROPEAN PATENT SPECIFICATION

(11) **EP 1 380 498 B1**
(45) Date of publication and mention of the grant of the patent: **26.01.2005**
(21) Application number: 02447130.2
(22) Date of filing: 10.07.2002
(51) Int. Cl.: B62D 55/04

(54) **Flexible endless track for vehicle**
Raupenband für Kraftfahrzeuge
Chenille flexible sans fin pour véhicule automobile

(43) Date of publication of application: 14.01.2004
(73) Proprietor: SOLIDEAL HOLDING SA, 2086 Luxemburg (LU)
(72) Inventor: Pringiers, Koen, Colombo 5 (LK)
(74) Representative: Luys, Marie-José A.H.

(56) References cited:
- DE-U- 9 302 375
- GB-A- 2 077 203
- NL-A- 7 605 810
- US-A- 4 362 340
- US-A- 4 848 430
- PATENT ABSTRACTS OF JAPAN vol. 012, no. 179 (M-701), 26 May 1988 (1988-05-26) -& JP 62 289480 A (KUBOTA LTD), 16 December 1987 (1987-12-16)

## Description

The present invention relates to a monolithic flexible track aimed at being used for converting a wheeled vehicle into a tracked vehicle. The term monolithic is used herein by opposition of a track composed of a plurality of connected rigid elements extending in cross direction of the length of the track.

A large number of solutions have been proposed in the past for providing wheeled vehicles with monolithic flexible tracks which can be installed on pairs of wheels remote from each other on the same side of a vehicle, the said wheels, or at least one of them being a driven wheel. Usually, such tracks are reinforced in longitudinal direction with different material such as steel or textile fibbers or cords.

Namely, GB 2 104 015 discloses such a flexible track of elastomeric material reinforced with nylon or steel filamentary material which can take the form of a continuous cord of the material wound in a plurality of side-by-side turns across the width of the track. The disclosed endless track is continuous and requires that the tires of the vehicle be deflated for mounting the said track on wheels of the vehicle. This operation is complicated and time consuming, since it imposes usually to elevate the vehicle in order to allow disposing the track around successive wheels, to force the track under the deflated tires when the vehicle is not elevated or to dismount wheels to engage the said track. Of course, the complementary operation of removal of the track from vehicle wheels presents the same disadvantages.

It has alternatively been proposed by US 4 362 340 to provide a monolithic flexible track that can readily be arranged on, or removed from a vehicle. The disclosed track is thus non continuous and is composed of flexible material reinforced with a liner of nylon, canvas or the like, embedded in the track. Near its two ends, the track is provided with a rim which is milled so that the said two ends interengage. The milled end rims are formed by alternating rectangular extensions and cavities. Each extension has a hole in the flexible material in which a tubing section is fastened. When the ends of the track are connected together the tubing sections form a substantially uninterrupted channel through which a steel rod passes, aimed at fastening the ends of the track in view of constituting an endless belt around the vehicle wheels.

Such a non continuous flexible track enables an easy mounting on vehicle wheels since the vehicle only needs to drive on the track before fastening its ends together around the said wheels.

However, in operation of the track on the vehicle wheels, especially when the latter has to drive in heavy ground conditions, the connection of the ends of the track are subjected to high tension stresses, involving the appearance of cracks in the width of the track, on the sides of the channel comprising the aforementioned tubing sections. These cracks will weaken the solidity of the track and could even lead to its breakage with the consecutive danger for the driver of the vehicle or persons being present near the latter.

The present invention affords a solution to this problem in ensuring that a passage constituted at each of the ends of the track for receiving a means for maintaining connected the said ends is reinforced by the reinforcement material embedded in the track.

Therefore, the invention provides a flexible track for converting a wheeled vehicle into a track vehicle, comprising a band of elastomeric material having a first and a second extremity and opposed first and second lateral longitudinal sides, which band is reinforced with at least one flexible elongated reinforcing element embedded in the band and extending along the length of the said band, the said first and second extremities being respectively provided with at least one hole extending in cross direction of the length of the band and forming a passage for receiving a means for connecting the said first extremity to the said second extremity, for forming an endless track, the at least one reinforcing element forming a loop around the at least one hole at each of the said first and second extremities of the band, each reinforcing element (7) extending continuously from one lateral side of the said band to the opposite lateral side of the said band in making alternate loops around each said hole of each of the first and second extremities of the said band, and each reinforcing element (7) comprising a first and a second extremity, each of the latter being secured to the said reinforcing element to form one said loop.

Due to the presence of a loop of the flexible elongated reinforcing element around at least one hole at each extremity of the band of elastomeric material, the tension stresses that can be endured at the junction of the extremities of the track in operation of the track on the vehicle wheels will be absorbed by the said flexible elongated reinforcing element thus avoiding formation of cracks in the band of elastomeric material at the sides of the passage receiving the means for connecting the two extremities of the said band.

Each reinforcing element of the band extends continuously from one lateral side of the said band to the opposite lateral side of the said band in making alternate loops around each said hole of each of the first and second extremities of the said band. Such a configuration of the invention provides the track with an homogeneous traction resistance, especially at its extremities, since each passage for receiving a means for maintaining connected the extremities of the track will be properly reinforced.

Each reinforcing element comprises a first and a second extremity, each of the latter being secured to the said reinforcing element to form one said loop. This configuration affords an additional reinforcement of the extremities of the track.

DE-U-9302375 describes track elements for a flexible track for a vehicle. The elements have a longitudinal reinforcement which forms a loop around a transverse hole which is used in connecting similar track elements to each other. The reinforcement can be sheet like or in the form of cables. Although DE-U-9302375 discloses that reinforcement can be looped around a transverse hole to connect the elements, it does not disclose the particular solution of the characterising portion of claim 1 to the problem of strengthening the connecting ends.

It is also preferred that the said reinforcing element comprises at least one metal or textile cord or strip. Such material have the advantage of having a high tension resistance and a high flexibility.

More preferably, the said reinforcing element is composed of a steel cord strip embedded in an elastomeric material coating. Such a reinforcing element is comprised of steel cords disposed adjacent to each other and embedded in the said elastomeric material coating.

In a preferred embodiment of the invention, the said first and second extremity of the band is provided with alternating extensions and recesses, each extension being provided with at least one said hole, each extension of the first extremity being aimed at engaging a corresponding recess of the second extremity and each extension of the second extremity being aimed at engaging a corresponding recess of the first extremity, for forming across the width of the band, a channel with a plurality of successive holes for receiving the said means for connecting the said first and second extremities of the band. This embodiment enables a very simple means for maintaining connected the extremities of the band to be used, affords a strong bond to the latter and an outstanding continuity of the track once mounted on wheels of a vehicle.

It is preferred that each of said hole is provided with a rigid tubing section. This ensures that passage for receiving the means for maintaining connected the extremities of the band conserves its shape even when the said extremities are submitted to high tension forces.

Suitably, the said means for connecting the said first and second extremities of the band comprises at least one rigid or flexible elongated member having a length corresponding to the width of the said band and having a cross section adapted for passing through each said hole. This enables a fast and easy connection of the said extremities.

In another embodiment of the invention, the band further comprises rigid or flexible reinforcing elements disposed across the length of the band. This provides the said band with an improved transverse stability and resistance to impact damages that is suitable when the vehicle on which the track according to the invention is mounted has to progress in heavy and highly irregular ground conditions.

Possibly, the flexible track according to the invention further comprises at least one intermediary piece being removably connectible at the said first and second extremities of the band in view of modifying the length of the track. This enables the said track to be adapted to nearly any configuration of wheeled vehicles.

Preferably, the inner face of the band aimed at contacting the wheels of a vehicle is provided with traction ribs disposed so that to engage corresponding recesses in the said vehicle wheels. Such traction ribs afford an increased transmission efficiency of the movement of the wheels of the vehicle to the track. Therefore, the tension of the track on the said wheels can be lowered which is beneficial to the transmission of the power of the engine on the ground through the tracked wheels.

Also preferably, a plurality of guiding wings are disposed at a distance from each other along the said first and second lateral sides of the band and protruding from the latter so as forming a channel aimed at engaging lateral sides of the said vehicle wheels. Such guiding wings prevent detracking of the track from the wheel of the vehicle when used in extreme conditions.

Preferably, the guiding wings are arranged to exert a clamping force on the lateral sides of the vehicle wheels. They then also afford an increased transmission efficiency of the movement of the wheels of the vehicle to the track, as with aforementioned traction ribs.

The said guiding wings can be used alone or in combination with traction ribs. When used alone, guiding wings enable any kind of design of the tires of the wheels of the vehicle to be used, provided the width of the said tires is adapted to that of the track, whereas traction ribs require tire design to be adapted to the shape and position of the said ribs.

Guiding wings can be made of the same flexible material as that used for the band of the track according to the invention. Each guiding wing may in addition be reinforced with a rigid core, for example made of steel or any other suitable material, such a rigid core being preferably composed of two substantially orthogonal portions, one of them extending within the width of the band and the other within a guiding wing.

The invention will now be further detailed without limiting the scope of the invention, with reference to the attached drawings in which :
Figure 1 represents a partially exploded perspective view of a portion of a track according to the invention mounted on a wheel of a vehicle.
Figure 2a represents a perspective view of a flexible elongated reinforcing element of a track according to the invention.
Figure 2b represents a perspective view of a loop formed by a flexible elongated element according to the invention.
Figure 2c represents a front section view of the flexible elongated reinforcing element according to the invention.
Figure 3 represents a perspective view of a portion of a track according to the invention in a position in which the extremities of the band of the track are connected.
Figure 4 represents a top view of a portion of a track according to the invention.

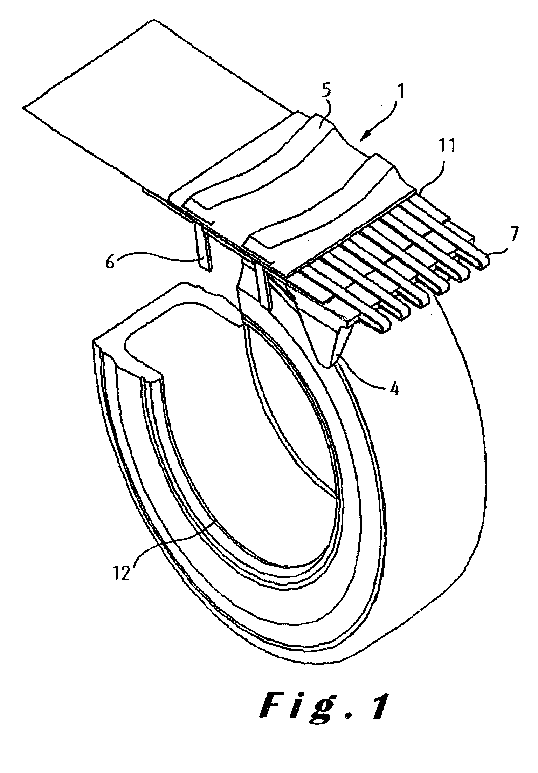

Referring to figure 1, there is shown a portion of a flexible track 1 according to the invention, mounted on a tyre 12 of a wheel of a wheeled vehicle (not shown). The track comprises a band 5 of elastomeric material in which is embedded a reinforcing element 7 consisting in a steel cord strip embedded in an elastomeric material coating. The reinforcing element 7 extends along the length of the track 1. The track further comprises flexible reinforcing elements 11 disposed across the length of the band 5 and guiding wings 4 made of the same material as the band 5 and protruding from the latter. The guiding wings 4 are aimed at engaging the lateral sides of the vehicle wheel and at exerting a clamping force on the said sides. Each guiding wing 4 is reinforced with a rigid core 6 made of steel and composed of two substantially orthogonal portions, one of them (not shown) extending within the width of the band.

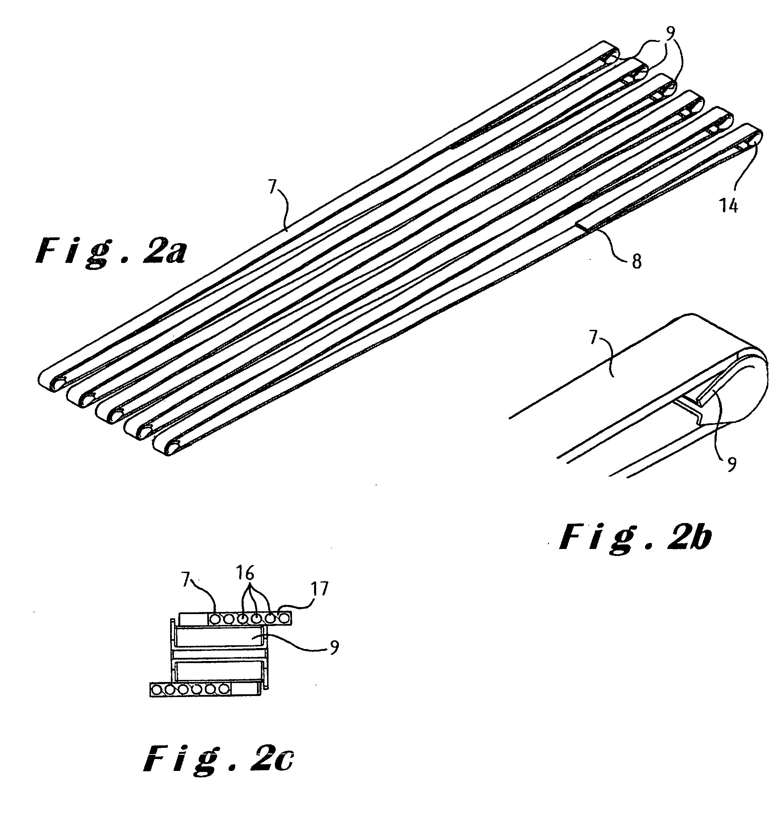

In figure 2a there is shown the flexible elongated reinforcing element 7 consisting of a steelcord strip embedded in an elastomeric material layer, before the said element 7 is embedded within the band (not shown) of the flexible track according to the invention. The flexible elongated reinforcing element 7 extends continuously from one lateral side of the band to the opposite lateral side of the latter in making alternate loops around rigid tubing sections 9 in view of delimiting holes 14 at the extremities of the band, said holes extending in cross direction of the length of said band for forming a passage for receiving a means (not shown) for connecting the said extremities of the band (not shown). The extremities 8 of the reinforcing element 7 are secured to the latter to form one of said loop.

Figure 2b shows a loop made by the flexible elongated reinforcing element 7 around a rigid tubing section 9 delimiting a hole 14 for the passage of a means (not shown)for connecting the extremities of the band (not shown).

Figure 2c shows in front section a the flexible elongated reinforcing element 7 comprising a steelcord strip 16 embedded in an elastomeric material coating 17.

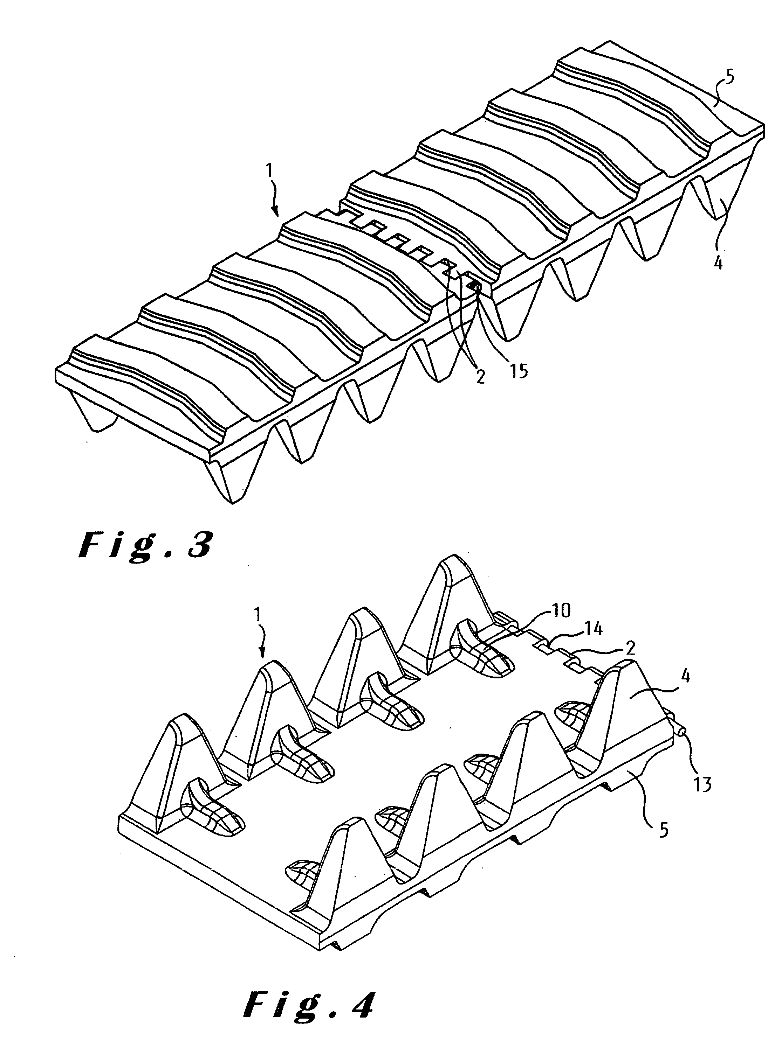

Figure 3 shows a portion of a flexible track 1 according to the invention comprising a band 5 of elastomeric material whose extremities are provided with alternating extensions and recesses 2. Each extension of one of the said extremities engages a corresponding recess of the other of the said extremities. Each extension is provided with a tubing section (not shown) in order that tubing sections of successive extensions form a across the width of the band a channel 15 for receiving a means (not shown) for connecting the said extremities of the band 5.

Figure 4 shows a portion of a flexible track 1 according to the invention, comprising a flexible band of an elastomeric material 5 having guiding wings 4 and tractions ribs 10 disposed at the inner face of the band 5 which is aimed at contacting wheels of a vehicle on which the track is to be mounted. Shown on the figure is an extremity of the band 5 provided with alternating extensions and recesses 2, each of the said extensions having a hole 14 delimited therein in cross direction of the length of the band for forming a passage for receiving a means 13 for connecting the extremities of the band 5 when the track is mounted on wheels of a vehicle, the said means 13 consisting in a rigid elongated element.

## Claims

1. Flexible track (1) for converting a wheeled vehicle into a tracked vehicle, comprising a band of elastomeric material (5) having a first and a second extremity and opposed first and second lateral longitudinal sides, which band is reinforced with at least one flexible elongated reinforcing element (7) embedded in the band and extending along the length of the said band, the said first and second extremities being respectively provided with at least one hole (14) extending in cross direction of the length of the band and forming a passage (15) for receiving a means (13) for connecting the said first extremity to the said second extremity, for forming an endless track, **characterised in that** the at least one reinforcing element (7) forms a loop around the at least one hole (14) at each of the said first and second extremities of the band, that each reinforcing element (7) at each extremity extends continuously in the band material from one lateral side of the said band to the opposite lateral side of the said band in making alternate loops around each said hole of each of the first and second extremities of the said band, and that each reinforcing element (7) comprises a first and a second extremity, each of the latter being secured to the said reinforcing element to form one said loop.

2. Flexible track (1) according to claim 1, **characterised in that** each reinforcing element (7) comprises at least one metal or textile cord or strip.

3. Flexible track (1) according to claim 2, **characterised in that** each reinforcing element (7) is composed of a steelcord strip (16) embedded in an elastomeric material coating (17).

4. Flexible track (1) according to any one of the preceding claims, **characterised in that** the said first and second extremity of the band of elastomeric material (5) is provided with alternating extensions and recesses (2), each extension being provided with at least one said hole (14), each extension of the first extremity being aimed at engaging a corresponding recess of the second extremity and each extension of the second extremity being aimed at engaging a corresponding recess of the first extremity, for forming across the width of the band, a passage (15) with a plurality of successive holes for receiving the said means (13) for connecting the said first and second extremities of the band.

5. Flexible track (1) according to any one of the preceding claims, **characterised in that** each said hole (14) is provided with a rigid tubing section (9).

6. Flexible track (1) according to any one of the preceding claims, **characterised in that** the said means (13) for connecting the said first and second extremities of the band comprises at least one rigid or flexible elongated member having a length corresponding to the width of the said band and having a cross section adapted for passing through each said hole (14).

7. Flexible track (1) according to any one of the preceding claims, **characterised in that** the said band of elastomeric material (5) further comprises rigid or flexible reinforcing elements (11) disposed across the length of the band.

8. Flexible track (1) according to any one of the preceding claims, **characterised in that** it further comprises at least one intermediary piece being removably connectible to the said first and second extremities of the band in view of modifying the length of the track.

9. Flexible track (1) according to any one of the preceding claims, **characterised in that** the inner face of the said band aimed at contacting the said wheels of a vehicle is provided with traction ribs (10) disposed so as to engage corresponding recesses in the said vehicle wheels.

10. Flexible track (1) according to any one of the preceding claims, **characterised in that** it further comprises a plurality of guiding wings (4) disposed at a distance from each other along the said first and second lateral sides of the said band and protruding from th latter so as forming a channel aimed at engaging lateral sides of the wheels of said wheeled vehicle.

11. Flexible track (1) according to claim 10, **characterised in that** said guiding wings (4) are arranged to exert a clamping force on the lateral sides of the said vehicle wheels.

12. Flexible track (1) according to any one of claims 10-11, **characterised in that** said guiding wings (4) are reinforced with a rigid core.

## Patentansprüche

1. Raupenband (1) zum Umwandeln eines Radfahrzeugs in ein Raupenfahrzeug, umfassend ein Band aus elastomerem Material (5), das ein erstes und ein zweites äußerstes Ende und einander gegenüberliegende erste und zweite seitliche Längsseiten aufweist, wobei das Band mit zumindest einem biegsamen länglichen Verstärkungselement (7) verstärkt ist, das in das Band eingebettet ist und sich entlang der Länge des Bands erstreckt, wobei das erste und das zweite äußerste Ende jeweils mit zumindest einer Öffnung (14) versehen ist, die sich in der Querrichtung der Länge des Bands erstreckt und einen Durchgang (15) zum Aufnehmen eines Mittels (13) zum Verbinden des ersten äußersten Endes mit dem zweiten äußersten Ende zur Bildung eines Raupenbands bildet, **dadurch gekennzeichnet, daß** das zumindest eine Verstärkungselement (7) eine Schleife um die zumindest eine Öffnung (14) an jedem des ersten und des zweiten äußersten Endes des Bands bildet, daß sich jedes Verstärkungselement (7) an jedem äußersten Ende im Bandmaterial fortlaufend von einer seitlichen Seite des Bands zur gegenüberliegenden seitlichen Seite des Bands erstreckt, während es abwechselnde Schleifen um jede Öffnung eines jeden des ersten und des zweiten äußersten Endes des Bands ausführt, und daß jedes Verstärkungselement (7) ein erstes und ein zweites äußerstes Ende umfaßt, wobei jedes der letzteren am Verstärkungselement befestigt ist, um eine Schleife zu bilden.

2. Raupenband (1) nach Anspruch 1, **dadurch gekennzeichnet, daß** jedes Verstärkungselement (7) zumindest einen Metall- oder Gewebestrang oder -streifen umfaßt.

3. Raupenband (1) nach Anspruch 2, **dadurch gekennzeichnet, daß** jedes Verstärkungselement (7) aus einem Stahlstrangstreifen (16) besteht, der in einen Überzug (17) aus einem elastomeren Material eingebettet ist.

4. Raupenband (1) nach einem der vorhergehenden Ansprüche, **dadurch gekennzeichnet, daß** das erste und das zweite äußerste Ende des Bands aus elastomerem Material (5) mit abwechselnden Verlängerungen und Vertiefungen (2) versehen ist, wobei jede Verlängerung mit zumindest einer der Öffnungen (14) versehen ist, jede Verlängerung des ersten äußersten Endes auf einen Eingriff mit einer entsprechenden Vertiefung des zweiten äußersten Endes abzielt, und jede Verlängerung des zweiten äußersten Endes auf einen Eingriff mit einer entsprechenden Vertiefung des ersten äußersten Endes abzielt, um entlang der Breite des Bands einen Durchgang (15) mit mehreren aufeinanderfolgenden Öffnungen zum Aufnehmen des Mittels (13) zum Verbinden des ersten und des zweiten äußersten Endes des Bands zu bilden.

5. Raupenband (1) nach einem der vorhergehenden Ansprüche, **dadurch gekennzeichnet, daß** jede Öffnung (14) mit einem starren Rohrabschnitt (9) versehen ist.

6. Raupenband (1) nach einem der vorhergehenden Ansprüche, **dadurch gekennzeichnet, daß** das Mittel (13) zum Verbinden des ersten und des zweiten äußersten Endes des Bands zumindest ein starres oder biegsames längliches Element umfaßt, das eine Länge aufweist, die der Breite des Bands entspricht, und einen Querschnitt aufweist, der zum Durchgang durch jede Öffnung (14) geeignet ist.

7. Raupenband (1) nach einem der vorhergehenden Ansprüche, **dadurch gekennzeichnet, daß** das Band aus elastomerem Material (5) ferner starre oder biegsame Verstärkungselemente (11) umfaßt, die entlang der Länge des Bands angeordnet sind.

8. Raupenband (1) nach einem der vorhergehenden Ansprüche, **dadurch gekennzeichnet, daß** es ferner zumindest ein Zwischenstück umfaßt, das im Hinblick auf ein Abändern der Länge des Raupenbands abnehmbar mit dem ersten und dem zweiten äußersten Ende des Bands verbunden werden kann.

9. Raupenband (1) nach einem der vorhergehenden Ansprüche, **dadurch gekennzeichnet, daß** die innere Fläche des Bands, die auf den Kontakt mit den Rädern eines Fahrzeugs abzielt, mit Zugrippen (10) versehen ist, die so angeordnet sind, daß sie mit entsprechenden Vertiefungen in den Fahrzeugrädern eingreifen.

10. Raupenband (1) nach einem der vorhergehenden Ansprüche, **dadurch gekennzeichnet, daß** es ferner mehrere Führungsflügel (4) umfaßt, die in Abständen voneinander entlang der ersten und der zweiten seitlichen Seite des Bands angeordnet sind und von letzteren vorspringen, um einen Kanal zu bilden, der auf einen Eingriff mit den seitlichen Seiten der Räder des Radfahrzeugs abzielt.

11. Raupenband (1) nach Anspruch 10, **dadurch gekennzeichnet, daß** die Führungsflügel (4) so angeordnet sind, daß sie eine Klemmkraft auf die seitlichen Seiten der Fahrzeugräder ausüben.

12. Raupenband (1) nach einem der Ansprüche 10 bis 11, **dadurch gekennzeichnet, daß** die Führungsflügel (4) mit einem starren Kern verstärkt sind.

## Revendications

1. Chenille flexible (1) pour convertir un véhicule à roues en un véhicule à chenille, comprenant une bande de matériau élastomère (5) ayant une première et une deuxième extrémité et des premier et deuxième côtés longitudinaux latéraux opposés, laquelle bande est renforcée avec au moins un élément de renforcement (7) allongé flexible encastré dans la bande et s'étendant sur la longueur de ladite bande, lesdites première et deuxième extrémités étant respectivement pourvues d'au moins un trou (14) s'étendant dans la direction transversale par rapport à la longueur de la bande et formant un passage (15) pour recevoir un moyen (13) pour connecter ladite première extrémité à ladite deuxième extrémité pour former une chenille sans fin, **caractérisée en ce que** ledit au moins un élément de renforcement (7) forme une boucle autour dudit au moins un trou (14) à chacune desdites première et deuxième extrémités de la bande, **en ce que** chaque élément de renforcement (7) à chaque extrémité s'étend de manière continue dans le matériau de la bande depuis un côté latéral de ladite bande jusqu'au côté latéral opposé de ladite bande en faisant des boucles alternées autour de chaque dit trou de chacune des première et deuxième extrémités de ladite bande, et **en ce que** chaque élément de renforcement (7) comprend une première et une deuxième extrémité, chacune de celles-ci étant assujetties audit élément de renforcement pour former une dite boucle.

2. Chenille flexible (1) selon la revendication 1, **caractérisée en ce que** chaque élément de renforcement (7) consiste en au moins un cordon ou une bande de métal ou de textile.

3. Chenille flexible (1) selon la revendication 2, **caractérisée en ce que** chaque élément de renforcement (7) est composé d'une bande à carcasse métallique (16) encastrée dans un revêtement (17) en matériau élastomère.

4. Chenille flexible (1) selon une quelconque des revendications précédentes, **caractérisée en ce que** ladite première et deuxième extrémité de la bande en matériau élastomère (5) est pourvue d'extensions et d'évidements (2) en alternance, chaque extension étant pourvue d'au moins un dit trou (14), chaque extension de la première extrémité étant destinée s'engager dans un évidement correspondant de la deuxième extrémité et chaque extension de la deuxième extrémité étant destinée à s'engager dans un évidement correspondant de la première extrémité pour former sur la largeur de la bande un passage (15) avec une pluralité de trous successifs pour recevoir ledit moyen (13) pour connecter lesdites première et deuxième extrémités de la bande.

5. Chenille flexible (1) selon une quelconque des revendications précédentes, **caractérisée en ce que** chaque trou (14) est pourvu d'une section de tubage (9) rigide.

6. Chenille flexible (1) selon une quelconque des revendications précédentes, **caractérisée en ce que** ledit moyen (13) pour connecter lesdites première et deuxième extrémités de la bande consiste en au moins un membre allongé rigide ou flexible ayant une longueur correspondant à la largeur de ladite bande et ayant une section transversale adaptée pour passer à travers chaque dit trou (14).

7. Chenille flexible (1) selon une quelconque des revendications précédentes, **caractérisée en ce que** ladite bande de matériau élastomère (5) comprend en outre des éléments de renforcement (11) rigides ou flexibles disposés transversalement par rapport à la longueur de la bande.

8. Chenille flexible (1) selon une quelconque des revendications précédentes, **caractérisée en ce qu'**elle comprend en outre au moins une pièce intermédiaire pouvant être connectée de manière amovible aux dites première et deuxième extrémités de la bande en vue de modifier la longueur de la chenille.

9. Chenille flexible (1) selon une quelconque des revendications précédentes, **caractérisée en ce que** la face intérieure de ladite bande destinée à entrer en contact avec lesdites roues d'un véhicule est pourvue de nervures de traction (10) disposées de manière à s'engager dans des évidements correspondants desdites roues du véhicule.

10. Chenille flexible (1) selon une quelconque des revendications précédentes, **caractérisée en ce qu'**elle comprend en outre une pluralité d'ailes de guidage (4) disposées à une distance les unes des autres le long desdits premier et deuxième côtés latéraux de ladite bande et faisant saillie de ces derniers de manière à former un canal destiné à entrer en prise avec les côtés latéraux des roues dudit véhicule à roues.

11. Chenille flexible (1) selon la revendication 10, **caractérisée en ce que** lesdites ailes de guidage (4) sont agencées pour exercer une force de serrage sur les côtés latéraux des roues dudit véhicule.

12. Chenille flexible (1) selon une quelconque des revendications 10 - 11, **caractérisée en ce que** lesdites ailes de guidage (4) sont renforcées avec un noyau rigide.
